# EUROPEAN PATENT APPLICATION

(11) **EP 0 937 952 A2**
(43) Date of publication of application: **25.08.1999**
(21) Application number: 99301192.3
(22) Date of filing: 18.02.1999
(51) Int. Cl.: F24H 8/00, F24H 1/40

(54) **Heat exchanger**

(30) Priority: 24.02.1998 GB 9803871
(71) Applicant: Caradon Ideal Limited, Hull, North Humberside HU5 4JN (GB)
(72) Inventor: Bratley, Roy, Hessle, Hull HU13 0HP (GB)
(74) Representative: Lerwill, John

(57) **Abstract**

According to a first aspect of the invention, the innermost edges of tubes (1') of a condensing gas boiler are substantially devoid of fins (8c) to define a drainage path for condensate formed on the fins. By this means the risk of condensate deposits formed on the fins or the tubes falling on to the burner and thus causing a malfunction is reduced.

According to a second aspect of the invention, a tube of the heat exchanger is provided with detent means (53) for an edge of the heat exchange fins to facilitate accurate location of the fins.

The applicants prior European application nos 0685698 and 0825406 form an integral part of the application.

## Description

This invention relates to improvements to the heat exchangers described in our co-pending European Patent Applications Nos 0685698 and 0825406.

Application No 0685698 generally relates to a heat exchanger for a condensing gas boiler having means for draining condensate from substantially horizontal heat exchange fins. Application No 0825406 provides a modified version of the heat exchanger described in Application No 0685698 wherein the fins are inclined downwardly away from the combustion chamber at an angle of between 2° and 20 ° to the horizontal.

The arrangements described in our Applications mentioned above are generally effective in practising the inventions, but the present invention can provide further improvements to our previous proposals.

According to one aspect of the present invention there is provided a heat exchanger for a condensing boiler having a combustion chamber comprising a plurality of generally upright tubes for conducting liquid through the heat exchanger and fins attached to the tubes, characterised in that a predetermined drainage path for condensate is provided by a peripheral surface portion of at least one of the tubes. Preferably the tubes are arranged in circumferential rows around a combustion chamber and the predetermined path is defined by segments of the tubes of the innermost row of tubes, said segments being substantially devoid of contact with the fins so that the flow of condensate down the path is not impeded by the fins.

Condensate formed on the inwardly facing surface parts of the innermost row of tubes drains directly from the heat exchanger assembly rather than collecting on the fins, and the risk of condensate deposits collecting at the leading edges of the fins and eventually falling onto the burner and thus causing a malfunction can be further reduced by setting the leading edges of the fins back from the innermost surface parts of these tubes.

According to another aspect of the present invention there is provided a heat exchanger for a condensing boiler having a combustion chamber comprising a plurality of generally upright tubes for conducting liquid through the heat exchanger and fins attached to the tubes, characterised in that at least one of the tubes is provided with detent means for receiving an edge of the fins. The detent means preferably comprise grooves or slots in the tube. The detent means are spaced apart at a distance equal to the fin pitch and they facilitate accurate location of the fins before the fins are secured to the tubes. The slots may be substantially crescent shaped, and the tube may have a generally D-shaped internal diameter. The base of the slot may be substantially parallel to the planar inner surface of the tube, and the tube wall thickness in the plane of the slot may be substantially uniform. One process by which the fins may be secured to the tubes is brazing, and the detent means can improve tube to fin contact thereby improving the integrity of the brazed joint. The provision of detent means is particularly, but not exclusively suited to the first described aspect of the invention as there may be no, or insufficient, frictional contact between the fins and the tubes for assisting successful brazing.

It will be apparent from the foregoing description that both aspects of the present invention are applicable to either of the inventions described in our previous Applications, and that the different aspects of the present invention may be applied individually or in combination.

A clear understanding of different aspects of the present invention will be gained by reference to the following detailed description, given by way of example only with reference to the accompanying drawings, in which:
Figure 1 is a front elevation of a known heat exchanger for a gas boiler;
Figure 2 is a side elevation of the heat exchanger shown in Figure 1 with the gas burner assembled therewith;
Figure 3 is a horizontal cross section through the heat exchanger of Figure 2;
Figures 4A and 4B are side and plan views of one particular form of heat exchanger segment;
Figures 5A and 5B are side and plan views of the second form of heat exchanger segment;
Figures 6A and 6B are side and plan views of a third form of heat exchanger segment;
Figure 6C is a plan view showing a modified form of the fin plate of Fig. 6B;
Figure 6D is an enlarged plan view showing the region of one of the water tube holes in the fin plate of Fig. 6C;
Figure 6E is an enlarged plan view showing the configuration of one of the fin edge tabs of the fin plate of Fig. 6C;
Figure 6F is an enlarged partial cross-section showing the positioning of the additional tabs in relation to the water tubes in the assembled heat exchanger.
Figure 7 is a side elevation of a heat exchanger with a gas burner assembled therewith;
Figure 8 is a side elevation of a heat exchanger during manufacture;
Figure 9 is an enlarged partial side view of the heat exchanger shown in Figure 8.
Figure 10 is a plan view of a heat exchanger fin plate;
Figure 11 is an illustrative cross sectional side view along the line X-X' of Figure 10; and
Figure 12 is a plan view of a heat exchanger fin plate;
Figure 13 is a plan view of a heat exchanger fin according to the first aspect of the invention;
Figure 14 is an illustrative cross-sectional side view along the lines Y-Y' of Figure 13;
Figure 15 is a side view of a preferred tube configuration, shown partially cut away;
Figure 16 is a cross-sectional view from the direction Z-Z' of figure 15; and
Figure 17 is a perspective view of a preferred tube configuration

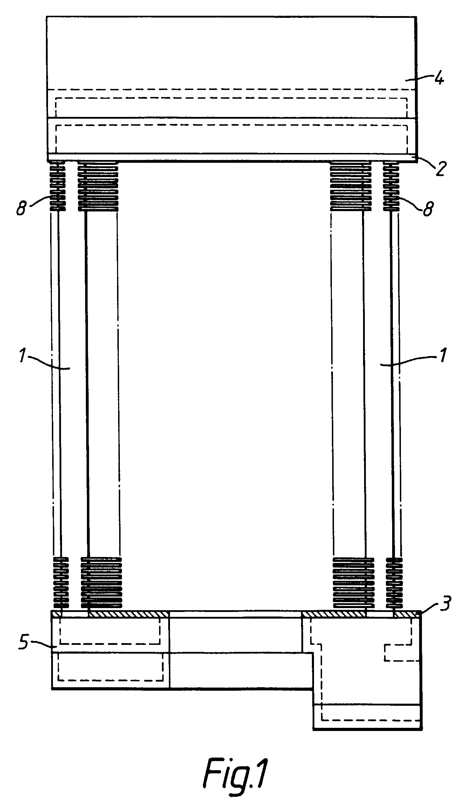

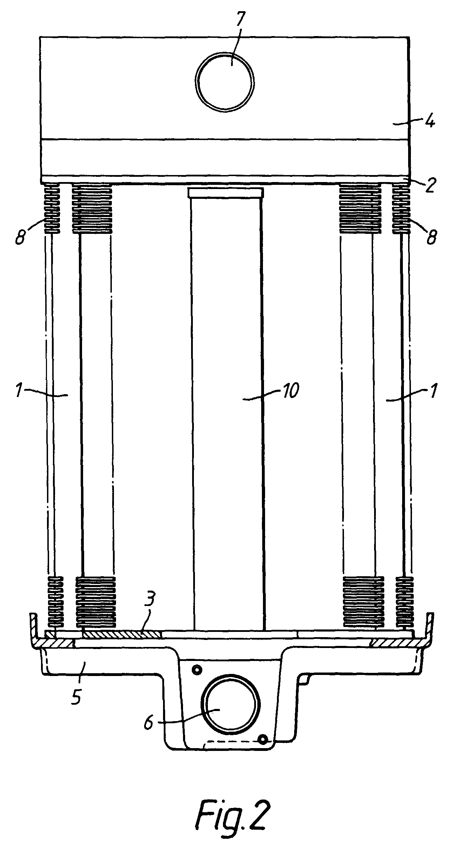

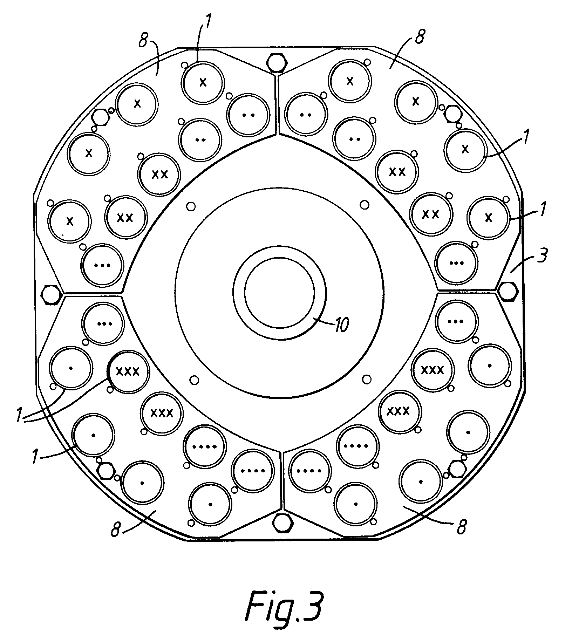

Illustrated in Figures 1 to 6 is a known heat exchanger and gas burner assembly suitable for a domestic gas boiler. The heat exchanger includes several parallel metal tubes 1 arranged in an annular array and fastened between upper and lower tube end plates 2,3. The tube end plates are respectively secured and sealed to upper and lower headers 4,5 to confine within the headers chambers for conducting water to and from the tubes as explained in more detail below. The lower header includes a water inlet 6 for entry of water to be heated into the heat exchanger, and the upper header includes a water outlet 7 for hot water having flowed through the heat exchanger and been heated. The tubes are fitted with fins 8 which in well known manner serve to increase the surface area for heat exchange with hot flue gases passing between the tubes 1. The fins are mounted over the full height of the tubes 1 and are only partially shown in Figures 1 and 2. For convenience the assembly of tubes, end plates and fins is manufactured as four equal segments. Each heat exchanger segment includes nine tubes with their axes disposed in two arcuate rows, as best seen in Figure 3, there being five tubes in the inner row and four tubes in the outer row. Each fin plate in each segment surrounds all the tubes of this segment, these fin plates being substantially horizontal in the assembled heat exchanger. The fin plates may be fitted frictionally to the tubes or may be fixed thereon such as by soldering. The upper and lower headers are shaped to form chambers communicating with the tube ends to provide a predetermined flow path for water through the heat exchanger. In particular, the incoming cold water first flows upwardly through the four outer tubes (.) of each of the two lower segments as viewed in Figure 3, it is then transferred by the upper header and flows downwardly through the four outer tubes (x) of each of the two upper segments of Figure 3. Upon reaching the lower header again the water is transferred to flow upwardly through the neighbouring adjacent two of the inner tubes (..) of the two upper segments in Figure 3, following which the water is transferred by the upper header to flow downwardly through the next adjacent pairs of inner tubes (xx) of the two upper segments. The water is then directed by the lower header to flow upwardly through the adjacent inner tubes (...) of the upper and lower segments as viewed in Figure 3, and is subsequently directed to flow downwardly through intermediate adjacent tubes (xxx) of each lower segment, and finally is directed by the lower header to pass upwardly through the neighbouring adjacent pairs of inner tubes (....) of the two lower segments, whereafter the water passes out through the outlet of the upper header. Thus it will be appreciated that each drop of water is constrained to make seven passes along the heat exchanger tubes in flowing from the inlet 6 to the outlet 7. Of course a greater or smaller number of tubes could be used with the chambers in the headers arranged accordingly, and if desired the water may be constrained to make more or less than seven passes along the tubes in flowing through the heat exchanger.

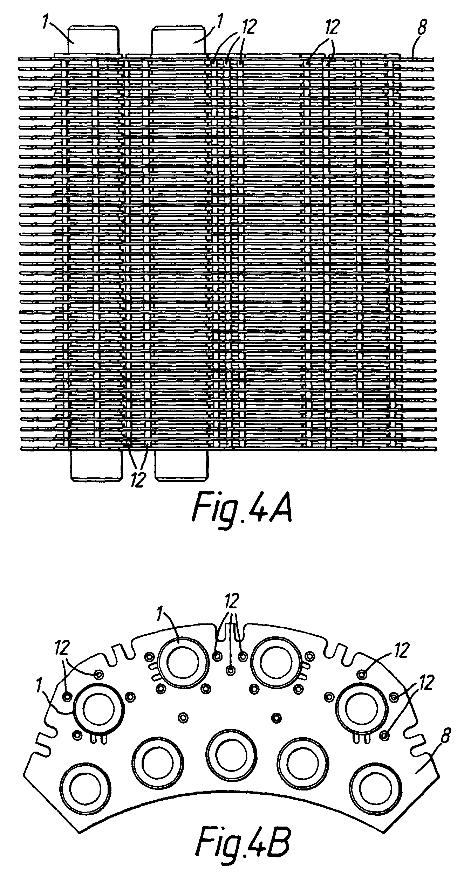

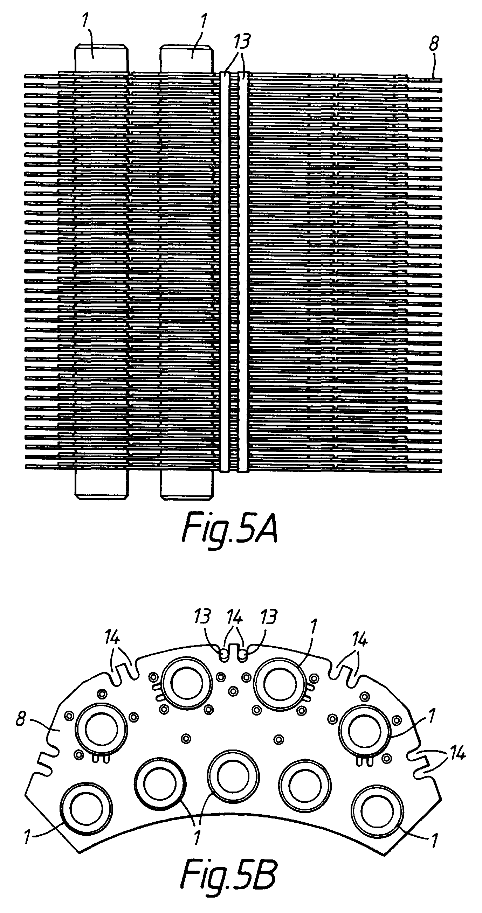

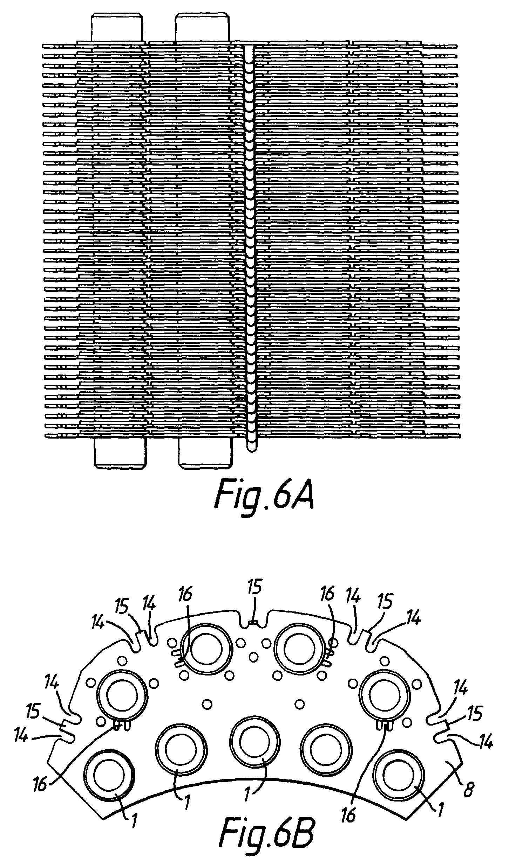

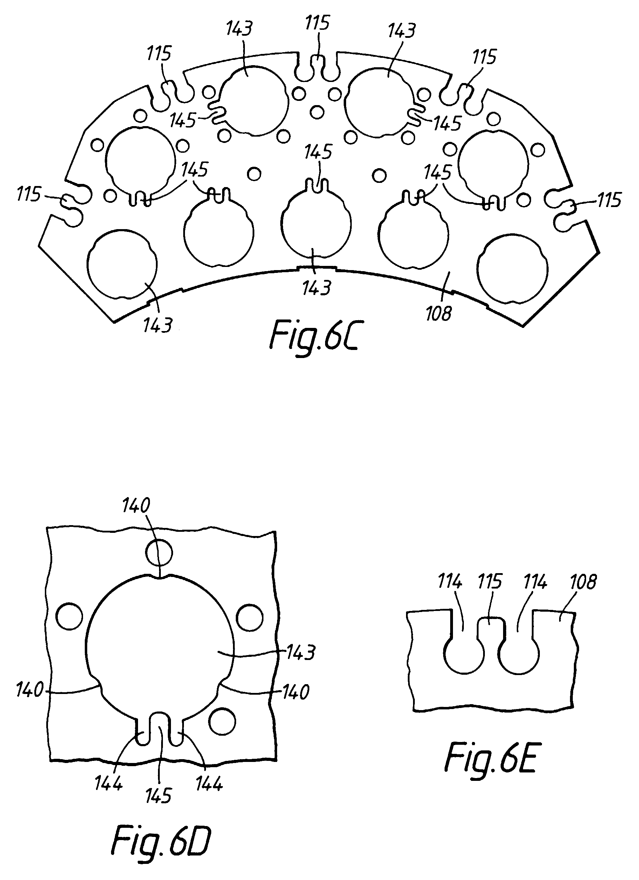

The heat exchanger is of annular form enclosing a central combustion chamber wherein a cylindrical burner 10 is disposed. The outer contour of the heat exchanger is defined by the fins and end plates (see Figure 3) is generally circular with flat sides allowing the heat exchanger to be housed in a substantially square casing whereby corner spaces are defined within the casing to form flue ducts extending along the heat exchanger and into which the flue gas passes by flowing between the fins 8 from the combustion chamber. On passing through the fin interspaces, the flue gases give up their heat and become cooled. The heat transfer efficiency is such that the flue gases can at least under some operating conditions be reduced in temperature to below the dew point and moisture then condenses out on the surfaces of the fins. As the temperature of the fins will be lowest adjacent their outer edges, due to the outer tubes carrying the coolest water, condensate is most likely to be formed on the outer portions of the fins and around the outer tubes 1. To prevent the condensate accumulating on the fin surfaces and forming a film or layer of water thereon, which would act as a thermal insulator and hence reduce the efficiency of the heat exchange with the flue gases, drainage means are provided in association with the fins to facilitate rapid removal of condensate to the lower region of the heat exchanger below the inter-fin flue gas passages. This means may take different specific forms. In Figures 4A and 4B there is shown an embodiment of a heat exchanger segment in which several rods 12 are arranged to extend vertically through aligned apertures in the fins 8. The rods 12 extend continuously at least from the uppermost fin to below the lowermost fin. The rods contact the fins but do not fill the cross-section of the holes in the fins so that gaps are left through which water drops can pass. Under normal surface tension effects, the condensate collecting on the upper surface of a fin will be drawn towards a rod adjacent to which a liquid drop will form until it is large enough to run down along the rod under its own weight due to gravity. As clearly shown in Figure 4B, the rods are disposed in clusters of four around the outer water tubes 1, and three additional rods are located at intermediate positions spaced at greater distances from the water tubes. All the rods are positioned between the inner water tubes and the outer edge of the fins. (In the interest of clarity only two water tubes have been included in Figure 4A, which also applies to Figures 5A and 6A).

In the embodiment shown in Figures 5A and 5B, instead of solid rods elongate wicks 13 are arranged to extend longitudinally of the heat exchanger. Although the wicks could be located as described above in relation to the rods, there are shown two wicks positioned at the outer peripheral edge of the fins. The wicks are inserted into slots 14 which may be conveniently provided at the time of pressing the metal fins. The wicks, due to their natural absorbency and ability to conduct liquid provide an effective means of removing condensate from the fin surfaces. Of course, it is not necessary for a single pair of adjacent wicks to be provided in each heat exchanger segment and additional wicks could for example be inserted in any one or more of the further slots 14 shown formed in the fins in Figure 5B.

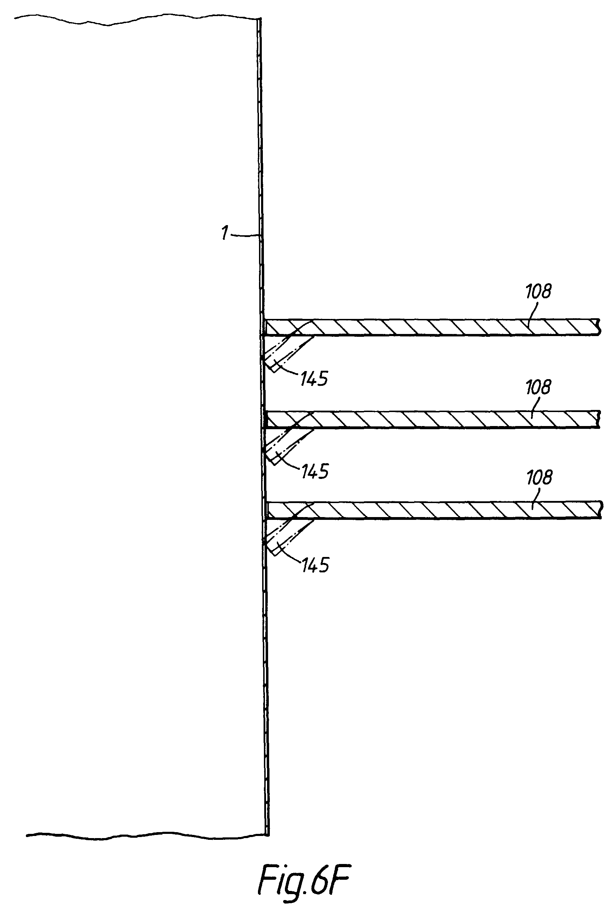

The fins in the embodiment of Figures 6A and 6B are provided with tabs 15 at the outer edges, these tabs being conveniently formed by slots 14 produced at the time of manufacture of the fins by pressing from metal sheet. The corresponding tabs of all the fins are bent downwardly, so that the deflected tabs define a flow path for water condensing on the fin surfaces. The water is drawn by surface tension towards the tabs and runs down the continuous flow path defined by the tabs. Each tab may be deflected so that it contacts the next tab below, but this is not essential since if gaps are left it merely means that drops of water will collect at the extremities of the tabs and then fall away when they have grown large enough for their weight to overcome the surface tension forces. The fins are shown provided with additional tabs 16 located adjacent those radially outer tubes 1 which carry the cooler water during its passage through the heat exchanger. Illustrated in Figure 6C is a modified fin plate 108 formed with a plurality of tabs 115 at its outer edge. At least one and preferably all of these tabs are deflected downwardly in the assembled heat exchanger so that the aligned deflected tabs define a drainage path for conducting condensate to the lower part of the heat exchanger. As shown in Figure 6E, each tab 115 is defined by a pair of adjacent notches 114 shaped as a circular hole connected to the fin edge by a slot of width less than the hole diameter so that the tab has a waisted neck portion, which may assist in drawing water onto the tab. Around the periphery of each water tube hole 143 are small protrusions 140 for providing a loose interference fit between the fin plate and the tube. Furthermore, additional condensate drainage tabs 145 are provided at the periphery of at least some of the holes. As shown all the holes for the outer tubes, and the holes for the three medial inner tubes are equipped with additional tabs 145. Each tab is defined by a pair of parallel slots 144 and is formed with such a length that its free end projects into the tube hole so that when the tube 1 is inserted, the tab is deflected downwardly and rests with its free end abutting the tube surface as shown in Figure 6F. Consequently, these downwardly deflected tabs 145 combine with the tubes 1 to define drainage paths for conducting condensate from the fins to the lower region of the heat exchanger. It will be noted that the tabs 145 associated with the outer tubes are positioned so that they are distributed over an outer portion of the fin plate, and the tabs 145 associated with the inner tubes are located at the outer, i.e. cooler, side of these tubes.

It should be understood that the embodiments of Figures 4 to 6 could be combined in the same heat exchanger. For example, the fins illustrated in Figure 6B or 6C could have one or more rods inserted through the holes shown, and/or one or more wicks could be inserted in the slots 14 or 114 flanking tabs 15 or 115 which have not been downwardly deflected. Of course, additional ones of the tabs not shown bent downwardly in Figure 6B could be deflected to form flow paths for condensate removal and preferably all the tabs are bent down to achieve maximum drainage.

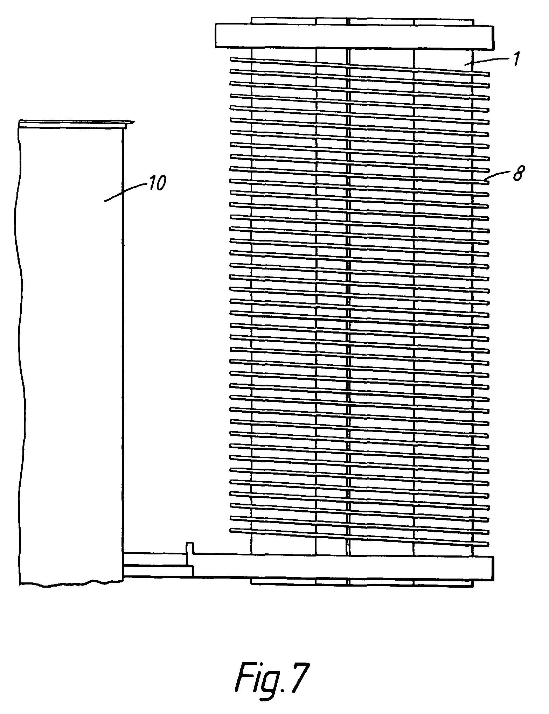

A modified heat exchanger is shown in Figure 7. The general arrangement of the tubes 1 and the fins 8 is as described with reference to the known heat exchanger illustrated in Figures 1 to 6. However, the fins are inclined downwardly in a direction away from the gas burner 10 at an angle between 3° and 8° to the horizontal, and thus condensate which collects on the fins after a firing period flows downwardly and away from the gas burner under its own weight due to the force of gravity. Thereafter the drainage means associated with the fins, and which may be as described above in relation to Figures 1-6, facilitate rapid removal of the condensate from the fins, as hereinbefore described.

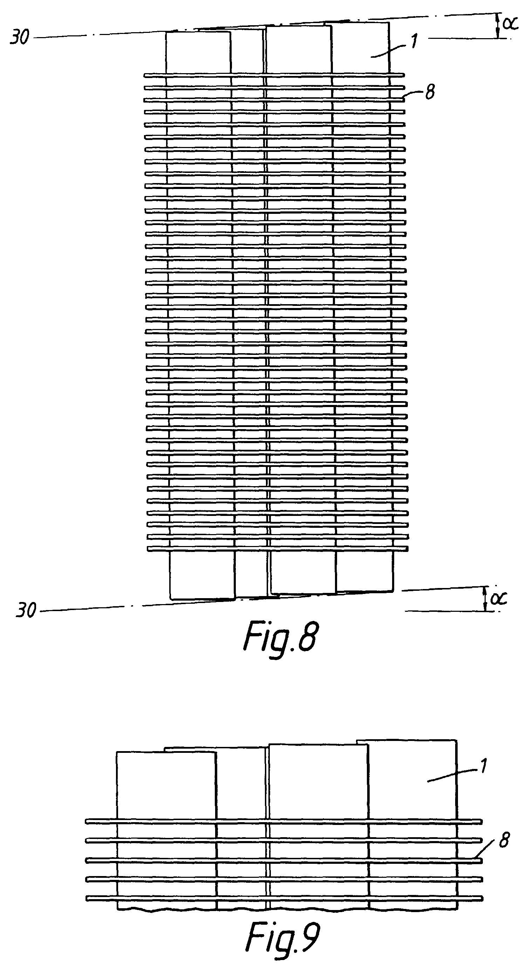

With reference to Figures 8 and 9, the fins 8 for a heat exchanger segment are mounted on a jig (not shown) in parallel with one another and the tubes 1 are placed on mandrels prior to being driven by a pneumatic ram through the aligned apertures in a direction orthogonal to the fins 8. The apertures in the fins 8 are proportioned to ensure an interference fit is obtained between the tubes 1 and the fins 8 such that the fins 8 are held in position when they are removed from the jig. The initial stop positions of the tubes 1 in the heat exchanger segment assembly are varied so that tubes positioned at different radial distances from the inner edges of the fins have their ends located in an imaginary plane 30 which is inclined at an angle of between 3° and 8° to the planes of the fins. After the fins have been released from the jig, the ends of the tubes 1 are forced into the end plates 2, 3 of the heat exchanger, thereby bringing the tubes 1 into alignment so that the fins 8 which are firmly attached to the tubes are pivoted on the tubes to an angle approximately equal and opposite to the angle of the plane 30. To secure the fins in their inclined positions, they can be fixed to the tubes, such as by brazing. In order to accommodate the sloping fins on the tubes, it is necessary to reduce the number of fins by one. However, in view of the large number of fins, this reduction does not significantly affect the efficiency of the heat exchange between the flue gases and the fluid passed through the tubes. The four segments of the complete heat exchanger are manufactured by the same method.

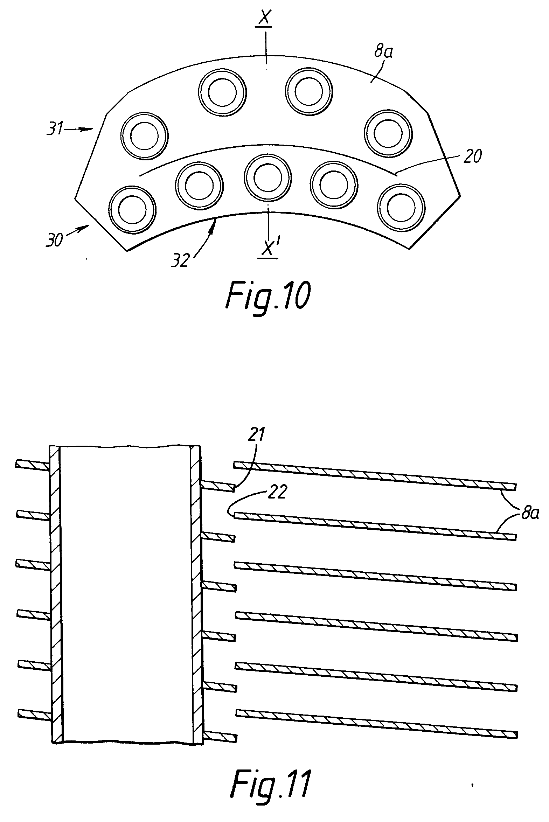

In an alternative modification to the heat exchanger, each fin 8a has an arcuate slit or cut 20 extending longitudinally between the inner and outer rows 30,31 of tubes 1. When the tubes 1 are aligned the fin plate 8 is deformed such that the inner edge 21 of the slit 20 is disposed above the outer edge 22 when the tubes are oriented vertically as shown in Figure 11. The vertical spacing between the edges increases to maximum at the longitudinal centre of the slit, at which point the spacing is approximately half the pitch between adjacent fins. The vertical gap formed by the slit acts as a physical barrier against the migration of condensate towards the innermost edge 32 of the fin plates 8a, thus enhancing the advantageous effects of the inclination of the fin plates 8a.

The slit 20 can be formed by any appropriate cutting or stamping operation, and it may take the form of a continuous arcuate or linear opening. Alternatively, each fin plate could have a series of discrete openings defining a plurality of slits.

In a further modification, apertures or slots 25 are cut or stamped in the fins 8b adjacent the outer sides of the inner row 30 of tubes 1. Also segments 26 of the fins 8b are removed from the region adjacent the innermost edge 32 of the fin 8b to reduce or minimise the surface area of the fin 8b in this region. The slots 25 impede the migration of condensate toward the front edge 32 of the fins 8b. The reduction of the surface area of the fin 8b in the region adjacent the innermost row 30 of tubes impairs the efficiency of heat transfer from the flue gases to the fins 8b in this area, thereby reducing or eliminating the formation of condensate on the area of the fin adjacent the inner rows of tubes 30. The slots 25 and segments 26 are generally vee-shaped and they may be formed to leave rings or annuli 27 of substantially uniform radial width for engagement with the tubes. The front edges of the fins 8b project forwardly a substantially uniform distance from the innermost row of tubes 30.

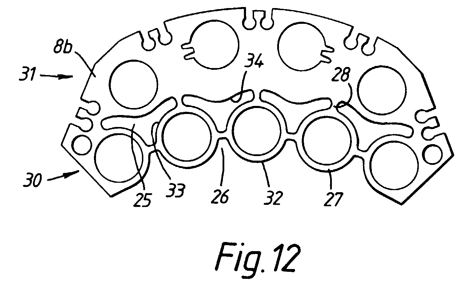

The fin 8b illustrated in Figure 12 may be deformed by the process of inclining the fins relative to the tubes such that the inner edges 33 the slots 25 are above the outer edges 34 (as described previously in relation to fin 8a). Whilst the deformation of the fin 8b may further enhance the ability of the fin 8b to restrict migration and formation of condensate to the inner edge of the fin, bridging portions 28 of the fin are preferably left between adjacent slots 25 to limit the deformation of the fin 8b and hence to facilitate accurate control of the inclination of the fins 8b during heat exchanger manufacture.

Fins 8a,8b with one or more slots 20 or slots 25 can also be used in heat exchangers with substantially horizontal fins.

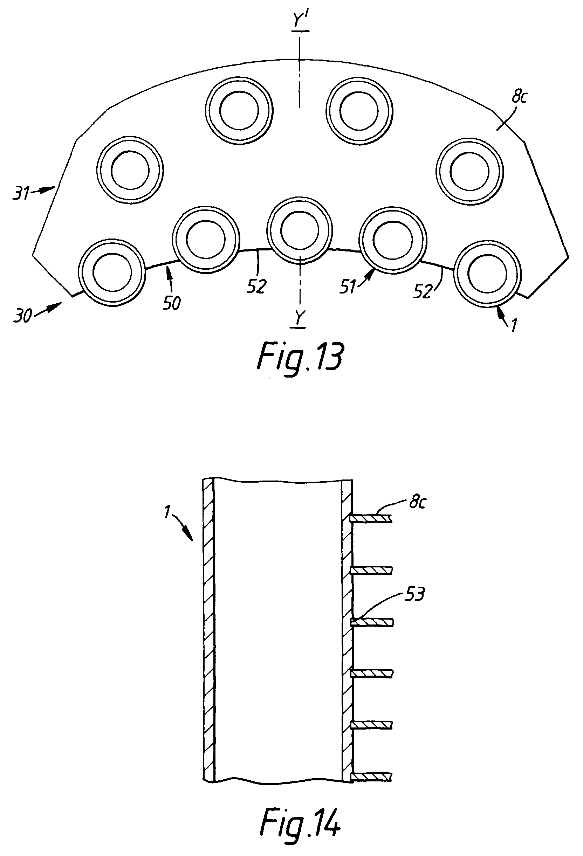

Turning now to the two aspects of the present invention, and with reference to Figure 13, the innermost edge 50 of the fin 8c lies on the circumference of an imaginary circle approximately centred at the middle of the gas burner 10. The circumference of the imaginary circle bisects the heat exchange tubes 1 leaving the innermost half 51 of the innermost row 30 of the tubes free of obstruction so that condensate formed on the tube surface can flow down the path defined by the exposed tube surfaces. Also the innermost edge 50 is set back from the gas burner and thus the chance of corrosion products falling from the leading edge and causing malfunction of the burner is reduced.

With the arrangements of previous applications, the condensate formed on the innermost row of tubes is collected by the fins, and in some circumstances the collection of condensate by the fins can hasten the build up of corrosion products because of the relatively poor drainage of condensate from the inner area of the fins.

Instead of bisecting the tubes 1, the imaginary circle may intersect the tubes to expose a major or a minor segment. Further the spans 52 between adjacent tubes 1 may have a greater curvature than the imaginary circle itself, with the imaginary circle serving to define the general location of the spans rather than their specific curvature.

The edge of each fin 8c in abutment with the tube 1 is received in a circumferential groove or slots 53 (see Figure 14). The grooves may extend around the circumference of the tube 1 or they may extend only partially around the tube (as illustrated). The grooves are spaced apart at the desired fin pitch and width of the grooves 53 is slightly greater than the depth of the fin 8c. The grooves facilitate insertion of the abutting fin edge prior to the brazing of the assembly and they enhance fin to tube contact for the brazing process.

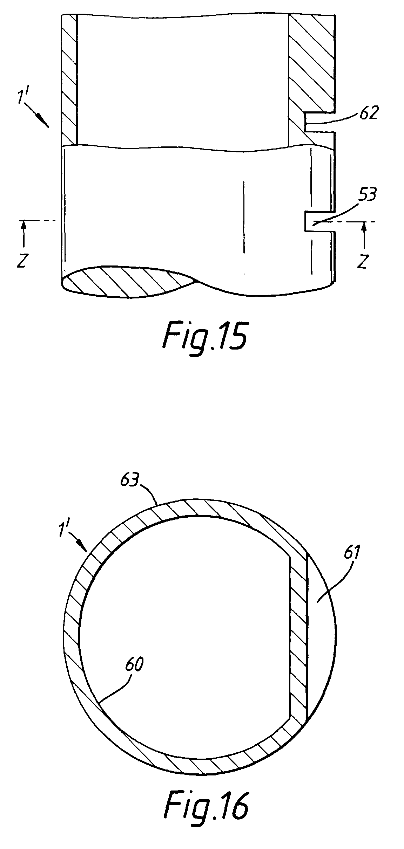

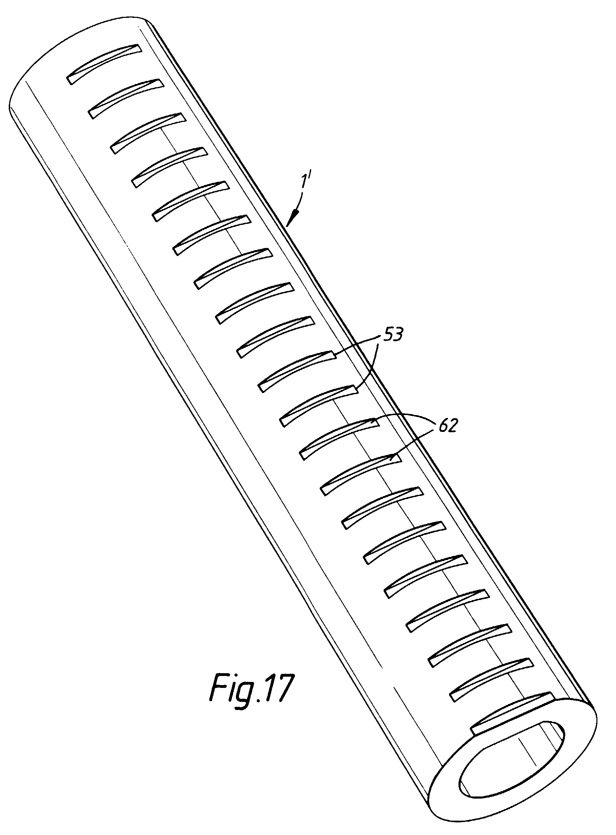

Referring now to Figures 15 to 17 the tube 1' has a generally D-shaped internal bore 60 to define a crescent shaped minor segment 61. The bases 62 of slots or grooves 53 are substantially parallel to the planar portion of the bore 60 and the tube wall thickness in the plane of the slot 53 is equal to the wall thickness of the major segment 63 of the tube 1' so that the wall thickness in the plane of the slot 53 is substantially uniform. The edge of the fin 8c received in the slots 53 may have complementary planar portions for abutment with the bases 62 of the slots 53 or the bases 62 may be bowed radially outwardly to conform to the curvature of the fin edge. However, point contact at either end of the slots is generally sufficient for assisting successful brazing. The slots 53 may be formed integrally with the tubes 1', or they may be cut or otherwise formed in the tube 1'.

Although the grooves are shown in conjunction with substantially horizontal fins, they are equally applicable to sloping fins. The grooves are particularly helpful for locating the edges of the fins 8c adjacent the innermost tubes where the direct mechanical connection between the abutting surfaces may be insufficient for the brazing process.

For the avoidance of doubt, it is stated that the matter described in European Applications Nos 0685698 and 0825406 forms an integral part of the description of this application.

## Claims

1. A heat exchanger for a condensing boiler having a combustion chamber comprising a plurality of generally upright tubes (1,1') for conducting a liquid through the heat exchanger and fins (8c) attached to the tubes, characterised in that a predetermined drainage path (51) for condensate is provided by a peripheral portion of at least one of the tubes.

2. A heat exchanger according to claim 1, wherein the tubes are arranged in substantially circumferential rows (30,31) around the combustion chamber.

3. A heat exchange according to claim 1 or 2 wherein the predetermined path is disposed in a region adjacent the combustion chamber.

4. A heat exchanger according to claim 1, 2 or 3, wherein the predetermined path is defined by a segment of the tube being substantially devoid of contact with the fins.

5. A heat exchanger according to claim 4, wherein the segment is substantially semicircular.

6. A heat exchanger according to any one of the preceding claims wherein at least one of the tubes (1') is provided with detent means (53) for receiving an edge of the fins.

7. A heat exchanger for a condensing boiler having a combustion chamber comprising a plurality of generally upright tubes (1,1') for conducting a liquid through the heat exchanger and fins (8c) attached to the tubes, characterised in that at least one of the tubes (1') is provided with detent means (53) for receiving an edge of the fins.

8. A heat exchanger according to claim 6 or 7 wherein the detent means comprise a groove in the tube.

9. A heat exchanger according to any one of claims 6, 7 or 8, wherein thickness of the tube wall in the planes of the fins is substantially uniform.

10. A heat exchanger according to claim 6, 7, 8 or 9 wherein the detent means are substantially crescent shaped.

11. A heat exchanger according to any one of the preceding claims wherein the fins are substantially horizontal.

12. A heat exchanger according to any one of claims 1 to 10, wherein the fins are inclined downwardly in the direction away from the combustion chamber at an angle of between 2° and 20° to the horizontal.

13. A heat exchanger according to claim 12, wherein the fins are inclined to the horizontal at an angle of between 3° to 8°.

14. A heat exchanger according to any one of the preceding claims wherein means connected to the fins extend downwardly therefrom to define an alternative predetermined drainage path for condensate formed on the fins.

15. A heat exchanger according to claim 14, wherein said means comprise one or more continuous elongate members (12;13) extending generally in the direction of the tubes.

16. A heat exchanger according to claim 15, wherein the elongate members comprise at least one rod (12) passing through aligned holes in the fins and in contact with the fins at the edges of the holes.

17. A heat exchanger according to claim 14 or 15, wherein the elongate members comprise at least one wick.

18. A heat exchanger according to any one of claims 14 to 17, wherein said means comprises tabs (15;16;115;145) defined by the fins and deflected out of the planes thereof for aligned tabs of adjacent fins to define a drainage path.

19. A heat exchanger according to any one of the preceding claims wherein each fin is provided with means (20;25) for impeding the migration of condensate towards the inner edge of the fins.

20. A gas boiler comprising a heat exchanger according to any one of the preceding claims.
